# EUROPEAN PATENT SPECIFICATION

(11) **EP 1 119 722 B1**
(45) Date of publication and mention of the grant of the patent: **28.04.2004**
(21) Application number: 99956427.1
(22) Date of filing: 06.10.1999
(51) Int. Cl.: F16K 27/00

(54) **MODULAR VALVE COMBINATION SYSTEM FOR WATER TYPE FLUIDS**
MODULARES VENTILSYSTEM FÜR FLUIDE WIE Z.B. WASSER
SYSTEME MODULAIRE DE COMBINAISON DE SOUPAPES POUR FLUIDES TELS QUE DE L'EAU

(30) Priority: 06.10.1998 SE 9803374
(43) Date of publication of application: 01.08.2001
(73) Proprietor: UWE-VERKEN AB, S-601 04 Norrköping (SE)
(72) Inventor: KARLSSON, Tomas, S-616 30 Aby (SE); HAKANSSON, Sören, S-614 90 Söderköping (SE)
(74) Representative: Willquist, Bo
(86) International application number: PCT/SE1999/001779
(87) International publication number: WO 2000/020784

(56) References cited:
- WO-A1-92/04568
- US-A- 2 834 368
- US-A- 3 747 623
- US-A- 4 574 844
- US-A- 5 020 570

## Description

The present invention relates to a modular valve combination system for water type fluids, comprising a number of valve units, in accordance with the preamble of claim 1.

When equipping a vehicle, such as a bus, with a multiple-circuit fluid heating system the space available for piping and valves usually is very limited, which makes it difficult or voluminous to install all the valves, piping and associated connections required in a technically well considered and proven way.

It is also usual in known multiple-circuit fluid heating systems, e.g. in a bus comprising an internal combustion engine, the cooling system of which is used as the onboard heat source, to arrange a variety of engine and/or interior preheating systems as well as a number of climate circuits for different parts and compartments of the bus, which climate circuits can be arranged at all height levels of the bus. The number of circuits and physical difference between them making installation complex and also complicating solutions to avoid accumulation into and extraction from the circuits of air and gases.

Vehicle fluid heating systems always contain gases. These gases may be combustion gas entering the system through un-tight seals in the internal combustion engine as well as outside air, infiltrating through untight connections and hoses within the system. With known systems the problem of gas accumulation in so called air pockets is often encountered, leading to a restriction or an obstruction of the fluid flow and hence affecting the overall performance of the heating system. Each time the system pressure changes, the air pockets change in volume, so that water may be expelled from the circuit, or water from other circuits may penetrate.

The object of the present invention is to provide an arrangement, which can eliminate or at least reduce the explained disadvantages of the known fluid heating systems. This object is achieved according to the invention through the use of said modular valve combination system which comprises the characterising features according to claim 1.

Preferred embodiments of the present invention also comprise one or more of the characterising features according to the dependent claims.

The modular valve combination system in accordance with the present invention is especially suited for installation in narrow spaces and can be mounted against and/or through walls, such as fire-walls. It can be mounted in comers, against ceilings etc. It is also possible to install the units vertically, horizontally side by side or horizontally on top of each other, whilst retaining the positive air extraction feature, as the internal lay-out of the modular valve combination system results in an installation where the air always has a tendency to escape to the return collector instead of flowing into the supply lines of the heating circuits. The inventive system also facilitates correct installation of the fluid-heating systems as it provides for easily understood logical connections and the bypass lines cannot be installed in an incorrect manner or at an unfavourable location as they are always guaranteed by the inventive modular valve combination system. A very low degree of engineering skills or workmanship is thus required for correct installation.

Further, the inventive modular valve combination system of a preferred embodiment, through the presence of at least one bypass-channel, always provides for a system specific minimum required fluid flow. This minimum required fluid flow constitutes an hydraulic protection of one or more elements in the system, which requires a maintained guaranteed minimum fluid flow.

When referring to water type fluids, these comprises water as well as water with additives such as e.g. glycol, rust-inhibitors and other additives common to fluid heating systems.

Preferred embodiments of the invention will be further explained below with reference to the enclosed drawings, in which:
- Fig 1: shows a first embodiment of a valve unit and collector housing of the modular valve combination system according to the present invention.
- Fig 2: shows a further embodiment of a valve unit and collector housing of the modular valve combination system according to the present invention stacked together in a pair.
- Fig 3: shows a valve unit and collector housing according to fig 1 stacked together with the two valve units and collector housings according to fig 2.
- Fig 4: shows a valve unit and collector housing without a bypass-channel and secondary valve means.

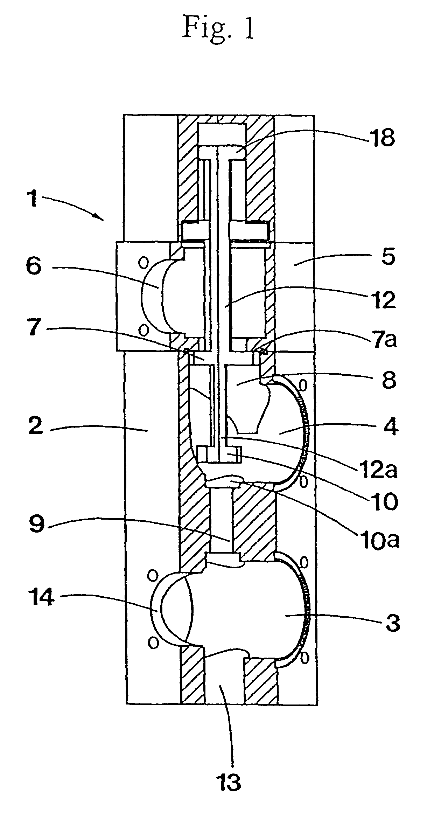

With reference to fig 1, 1 denotes a first valve unit, which is mounted to a stackable collector housing 2. The stackable collector housing 2 has first and second through bores 3, 4 adapted to, when the stackable collector housing 2 is stacked with other stackable collector housings 2, form a fluid supply collector 3 and a fluid return collector 4, each of which is continuos on through all the stacked collector housings 2.

The first valve unit 1 comprises a primary valve means 7, which is arranged in a first valve housing 5 attached to the stackable collector housing 2, so as to selectively allow a fluid flow into the fluid return collector 4 through a bore 8 in the stackable collector housing 2 from a first input opening 6 in the first valve housing 5 intended for fluid connection with the return line from a first climate circuit (not shown). The feed line to said first climate circuit is intended to be in fluid connection with an opening 14 into the fluid supply collector 3 of the stackable collector housing 2.

The stackable collector housing 2 further displays a bypass-channel 9, connecting the fluid supply collector 3 with the fluid return collector 4. The first valve unit 1 further comprises a secondary valve means 10, which is adapted to allow a bypass flow through said bypass-channel 9 when the primary valve means 7 is closed and vice versa.

The primary valve means 7 comprise a first valve cone 7 arranged on a valve stem 12, which is slideably arranged in the first valve housing 5. The first valve cone 7 is adapted to rest in a complementary first valve seat 7a when closed, thus sealing off the first valve housing 5 from the fluid return collector 4.

Further, secondary valve means 10 are formed from an extension 12a of the valve stem 12 protruding into the stackable collector housing 2, upon which extension 12a a second valve cone 10 is arranged, which second valve cone 10 is adapted to, when closed, rest in a complementary second valve seat 10a, thus sealing off the bypass-channel 9.

Primary and secondary valve means 7, 10 are adapted for operation by a pneumatic cylinder 18, arranged so as to give the valve stem 12 a linear axial movement. Instead of pneumatics, it is of course possible to use an electric, manual, thermo-hydraulic or similar actuator, which can produce said axial movement.

The valve cones 7, 10 are arranged so as to close against the direction of the fluid flows, in order to help avoid water-hammer. The opening 13 in the collector housing will, when in use, be closed by a plug or similar (not shown). The opening 13 can be used to get access to adapt the flow resistance of the bypass-channel to suit specific applications.

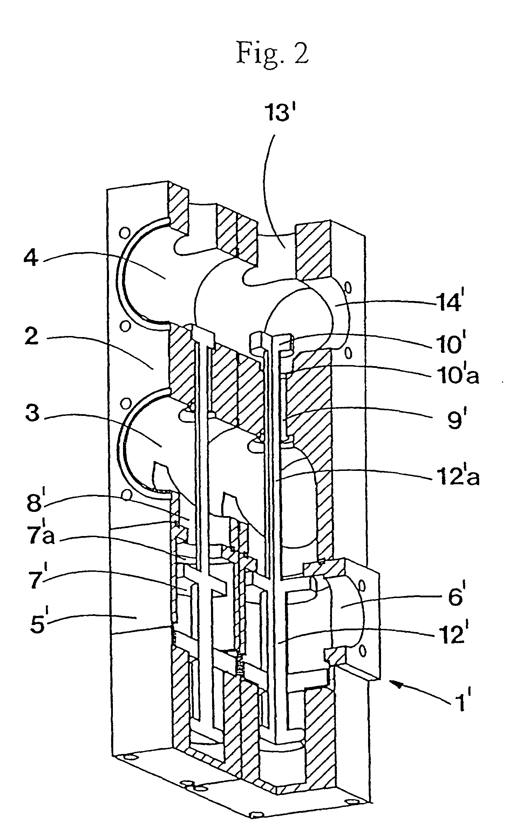

A further embodiment is denoted 1' in fig 2. In this embodiment the primary valve means 7' are arranged so as to selectively allow a flow out from the fluid supply collector 3 and on to a second climate circuit (not shown).

The primary valve means 7' of the first valve unit 1' is arranged in a first valve housing 5' attached to the stackable collector housing 2, so as to selectively allow a fluid flow out from the fluid supply collector 3 through a bore 8' in the stackable collector housing and on through an opening 6' intended for fluid connection to the feed line of a second climate circuit (not shown). The return line from said second climate circuit is intended to be in fluid connection with an opening 14' into the fluid return collector 4 of the stackable collector housing 2. The openings 13' in the collector housings will, when in use, be closed by plugs or similar (not shown).

As in the previous embodiment the stackable collector housing 2 further displays a bypass-channel 9', connecting the fluid supply collector 3 with the fluid return collector 4. The first valve unit 1' further comprise a secondary valve means 10', which is adapted to allow a bypass flow through said bypass-channel 9' when the primary valve 7' means is closed and vice versa.

The primary valve means 7' comprises a first valve cone 7' arranged on a valve stem 12', which is slideably arranged in the first valve housing 5'. The first valve cone 7' is adapted to, when closed, rest in a complementary first valve seat 7a', thus sealing off the first valve housing 5' from the fluid supply collector 3.

The secondary valve means 10' are formed from an extension of the valve stem 12a' protruding into the stackable collector housing 2 and on through the bypass-channel 9', upon which extension 12a' a second valve cone 10' is arranged, which second valve cone 10' is adapted so as to, when closed, rest in a complementary second valve seat 10a', thus sealing off the bypass-channel 9'.

Each respective bypass-channel 9, 9' can be arranged to contain a throttle (not shown). The permitted fluid flow through each respective bypass-channel 9. 9'can thereby be reduced in comparison to a system specific minimum required fluid flow, so that the sum of the permitted fluid flows through all bypass-channels 9, 9' etc, at least corresponds to a system specific minimum required fluid flow.

With regard to air extraction and in order to avoid the accumulation of air into the system, the internal lay-out of the valve combination system provides fluid connections so that air or gas in the system will automatically find its way to the return collector 4 and return pipe (not shown), which is located at a higher level so that air and gas will be carried to areas where it can be extracted, such as an expansion tank (not shown).

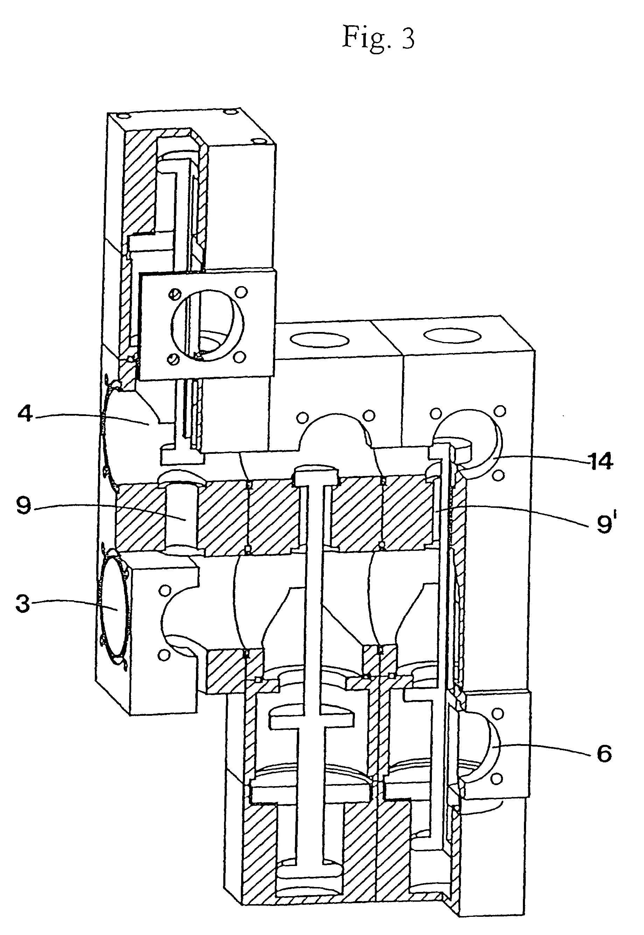

Fig 3 shows an example of how the units in accordance with figs 1 and 2 can be combined for a three circuit heating system. Hot water is intended to be supplied to the fluid supply collector 3 of the stacked units and returned from the fluid return collector 4 at a first end of the stack. The fluid return and supply collectors are respectively sealed off at the other end of the stack. Climate circuits (not shown) are intended to respectively be connected to the openings 14 and 6 of each unit.

The increased demand with respect to temperature stability within vehicles has led to the application of short cycling valves. However, modulating valves can also be used in the proposed system. Where the valve movement is shown as a linear operated valve stem and cones, it is understood that other valve means, e.g. with rotary movement, electrically operated also comply with the inventive system when these valve means are installed as to open and close similar valve ports.

The vehicle cooling system can also include an auxiliary fluid heater, e.g. auxiliary water heater (not shown). The bypass-channels 9, 9' then guarantees the minimum required coolant flow through the auxiliary heater, where, if required, the fluid temperature and thereby the heating capacity can be raised in a per se known manner. The auxiliary fluid heater can be a combustion type heater, an electrical heater or any other kind of suitable heater. In an auxiliary fluid heater, during burning time and some minutes afters shut down, a considerable minimum fluid flow must be maintained in order to cool down the burner. Therefore, when the thermostatic controls (not shown) shut down the climate-circuits, the bypass-channels 9, 9' will maintain the required fluid flow.

As the inventive valve combination system according to fig 3 always guarantees a minimum fluid flow, split over different climate circuits or bypass-channels 9, 9' in the valve assembly, the inventive system is less sensitive to water-hammer caused by re-routing of important fluid flows.

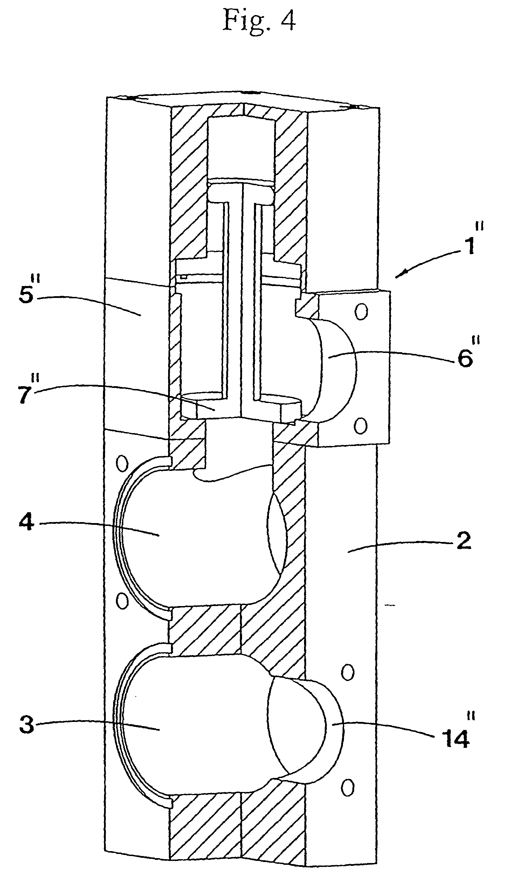

The valve unit 1" according to fig 4 is always intended to be used together with valve units of the kind described in conjunction with figs I through 3, and can be used if an increased bypass flow is not required upon closing the climate circuit (not shown) connected to this valve unit. When using this valve unit, which lacks secondary valve means, the bypass-channel in the collector housing is either sealed off or simply has never been opened.

Although the invention has been described in relation to heating systems for buses comprising an internal combustion engine, it can also equally advantageously be applied to heating systems for other vehicles, where there is a need for fluid heating systems with two or more climate-circuits, e.g. in trolley buses, motorcars with two-zones front heater and/or motor-homes. It is also obvious to the person skilled in the art that the inventive modular valve combination system can be used for the most divers applications, such as in ships, trains and other transport means, as well as in domestic and industrial applications.

The invention is obviously not limited to the embodiments described above by way of examples, but lends its self to modifications within the scope of the idea of the invention defined in the appended claims, for example one ore more of the valve units can be arranged with manual override facilities, thus permitting the driver of a vehicle to manually force a climate circuit to be either open or closed, even if the thermostatic devices or other control devices fail. Said climate circuits can of course instead of hot water for heating, contain cold water for air conditioning systems or other suitable fluids. It is also possible to complete the inventive system with piping accesories, such as waterfilters, check and service valves etc.

## Claims

1. Modular valve combination system for vehicle fluid heating systems containing water type fluids, comprising a number of valve units (1, 1', 1''), where each valve unit is associated with a stackable collector housing (2) with first and second through bores (3, 4), which when stacked form a fluid supply collector (3) and a fluid return collector (4) respectively, each continuos on through the stacked collector housings (2), **characterised in, that** each valve unit (1, 1', 1") comprises a primary valve means (7, 7', 7"), and **in that** at least one of the valve units (1, 1', 1") is connected to its associated stackable collector housing (2) so that its primary valve means (7, 7', 7") selectively can allow a flow either from the fluid supply collector (3) to an external circuit, which is then returned to the fluid return collector (4) or into the fluid return collector (4) from an external circuit, which originates from the fluid supply collector (3), and **in that** at least one of the stackable collector housings (2) displays a bypass-channel (9, 9'), connecting the fluid supply collector (3) with the fluid return collector (4), and **in that** the valve unit associated with said at least one collector housing (2) comprises a secondary valve means (10, 10') adapted to allow a bypass flow through the bypass-channel (9, 9'), when the primary valve means (7, 7', 7") is closed and vice versa.

2. Modular valve combination system according to claim 1, **characterised in, that** one or more respective bypass-channels (9, 9') contain a throttle.

3. Modular valve combination system according to any of the preceding claims, **characterised in, that** at least one valve unit (1, 1', 1'') has means for outside indication of the valve position.

4. Modular valve combination system according to any of the preceding claims, **characterised in, that** the stackable collector housings (2) for all valve units (1, 1', 1'') are formed as a single integral unit containing the fluid supply collector (3) and fluid return collector (4) as well as a bypass-channel (9, 9') associated with at least one valve unit.

5. Modular valve combination system according to any of the preceding claims, **characterised in, that** at least one of the valve units (1, 1', 1'') is arranged with a manual override facility.

6. Modular valve combination system according to any of the preceding claims, **characterised in, that** the valve means (7, 7', 7''; 10, 10', 10'') are arranged so as to close in a direction opposite to the direction of the fluid flow, in order to reduce the risk of water-hammer.

7. Modular valve combination system according to any of the preceding claims, **characterised in, that** the valve units (1, 1', 1'') arc adapted to be operated pneumatically, electrically, manually or thermo-hydraulically.

## Patentansprüche

1. Modulares Ventilkombinationssystem für Fluidheizsysteme mit wasserartigen Fluiden aufweisend eine Anzahl von Ventileinheiten (1,1',1''), wobei jede Ventileinheit (1,1',1'') mit einem stapelbaren Sammelgehäuse (2) mit ersten und zweiten Durchgangsbohrungen (3,4) verbunden ist, welche im gestapelten Zustand einen Fluidversorgungssammler (3) bzw. einen Fluidrückführungssammler (4) ausbilden, beide durchgehend durch die gestapelten Sammelgehäuse (2), **dadurch gekennzeichnet,**
**dass** jede Ventileinheit (1,1',1") ein erstes Ventilmittel (7,7',7") aufweist, und
**dass** zumindest eine der Ventileinheiten (1,1',1") mit seinem verbundenen stapelbaren Sammelgehäuse (2) derart verbunden ist, dass sein erstes Ventilmittel (7,7',7'') wahlweise einen Fluidstrom entweder von dem Fluidversorgungssammler (3) zu einem externen Kreislauf, der dann zu dem Fluidrückführungssammler (4) zurückgeführt ist, oder in den Fluidrückführungssammler (4) von einem externen Kreislauf, der von dem Fluidversorgungssammler (3) kommt, ermöglicht, und
**dass** zumindest eines der stapelbaren Sammelgehäuse (2) einen Bypass-Kanal (9,9') aufweist, der den Fluidversorgungssammler (3) mit dem Fluidrückführungssammler (4) verbindet, und
**dass** die mit dem mindestens einen Sammelgehäuse (2) verbundene Ventileinheit ein zweites Ventilmittel (10,10') aufweist, das derart ausgebildet ist, dass es eine Bypass-Strömung durch den Bypass-Kanal (9,9') ermöglicht, wenn das erste Ventilmittel (7,7',7'') geschlossen ist und umgekehrt.

2. Modulares Ventilkombinationssystem nach Anspruch 1, **dadurch gekennzeichnet, dass** ein oder mehr Bypass-Kanäle (9,9') eine Drossel enthalten.

3. Modulares Ventilkombinationssystem nach einem der vorangehenden Ansprüche, **dadurch gekennzeichnet, dass** zumindest eine Ventileinheit (1,1',1'') äußere Anzeigemittel zur Anzeige der Ventilstellung aufweist.

4. Modulares Ventilkombinationssystem nach einem der vorangehenden Ansprüche, **dadurch gekennzeichnet, dass** die stapelbaren Sammelgehäuse (2) für alle Ventileinheiten (1,1',1'') als einzelne, einstückige Einheit ausgebildet sind, die den Fluidversorgungssammler (3) und den Fluidrückführungssammler (4) wie auch einen Bypass-Kanal (9,9') aufweist, verbunden mit mindestens einer Ventileinheit.

5. Modulares Ventilkombinationssystem nach einem der vorangehenden Ansprüche, **dadurch gekennzeichnet, dass** zumindest eine der Ventileinheiten (1,1',1'') mit einer Handbetätigungseinrichtung versehen ist.

6. Modulares Ventilkombinationssystem nach einem der vorangehenden Ansprüche, **dadurch gekennzeichnet, dass** die Ventilmittel (7,7',7",10,10') derart angeordnet sind, dass sie in einer Richtung entgegen der Strömungsrichtung schließen, um die Gefahr des Wasserschlages zu verhindern.

7. Modulares Ventilkombinationssystem nach einem der vorangehenden Ansprüche, **dadurch gekennzeichnet, dass** die Ventileinheiten (1,1',1") derart ausgebildet sind, dass diese pneumatisch, elektrisch, manuell oder thermohydraulisch betätigbar sind.

## Revendications

1. Système modulaire de combinaison de vannes pour systèmes de chauffage de véhicule par liquides comportant des liquides tels que l'eau, comprenant plusieurs unités de vannes (1, 1', 1") où chaque unité de vanne est associée à un boîtier collecteur superposable (2) avec un premier et un second alésage traversants (3, 4) qui, à la superposition, forment respectivement un collecteur d'alimentation en fluide (3) et un collecteur de retour de fluide (4), chacun s'étendant à travers la superposition des boîtiers collecteurs (2), **caractérisé en ce que** chaque unité de vanne (1, 1', 1") comporte un moyen principal de soupape (7, 7', 7") et **en ce qu'**au moins une unité de vanne (1, 1', 1") est reliée à son boîtier collecteur superposable correspondant (2) de façon à ce que son moyen principal de soupape (7, 7', 7") puisse permettre sélectivement une circulation de fluide, soit à partir du collecteur d'alimentation en fluide (3) en direction d'un circuit extérieur, lequel fluide est ensuite renvoyé au collecteur de retour de fluide (4), soit dans le collecteur de retour de fluide (4) à partir du circuit extérieur, lequel a pour origine le collecteur d'alimentation en fluide (3), et **en ce qu'**au moins l'un des boîtiers collecteurs superposables (2) présente un canal de dérivation (9, 9') faisant communiquer le collecteur d'alimentation en fluide (3) et le collecteur de retour de fluide (4), et **en ce que** l'unité de vanne associée à l'un au moins desdits boîtiers collecteurs (2) comporte un moyen secondaire de soupape (10, 10') conçu pour permettre une circulation de fluide en dérivation par le canal de dérivation (9, 9') quand le moyen principal de soupape (7, 7', 7") est fermé, et vice-versa.

2. Système modulaire de combinaison de vannes selon la revendication 1, **caractérisé en ce que** l'un au moins des canaux de dérivation respectifs (9, 9') comporte un dispositif d'étranglement.

3. Système modulaire de combinaison de vannes selon l'une quelconque des revendications précédentes, **caractérisé en ce que** l'une au moins des unités de vanne (1, 1', 1") possède un moyen d'indication externe de la position de la soupape.

4. Système modulaire de combinaison de vannes selon l'une quelconque des revendications précédentes, **caractérisé en ce que** les boîtiers collecteurs superposables (2) de toutes les unités de vanne (1, 1', 1") sont constitués chacun comme élément intégral indépendant comportant le collecteur d'alimentation en fluide (3) et le collecteur de retour de fluide (4), également le canal by-pass (9, 9') associé à au moins une unité de vanne.

5. Système modulaire de combinaison de vannes selon l'une quelconque des revendications précédentes, **caractérisé en ce qu'**au moins une unité de vanne (1, 1', 1") est équipée d'un dispositif de passage en commande manuelle.

6. Système modulaire de combinaison de vannes selon l'une quelconque des revendications précédentes, **caractérisé en ce que** les moyens de soupapes (7, 7', 7" ; 10, 10', 10") sont disposés pour se fermer dans la direction opposée à la direction d'écoulement du fluide, de façon à réduire le risque de coups de bélier.

7. Système modulaire de combinaison de vannes selon l'une quelconque des revendications précédentes, **caractérisé en ce que** les unités de vanne (1, 1', 1") sont conçues pour être actionnées pneumatiquement, électriquement, manuellement ou thermo-hydrauliquement.
